Europäisches Patentamt

European Patent Office

Office européen des brevets

(11) Veröffentlichungsnummer: **0 257 597 B1**

# EUROPÄISCHE PATENTSCHRIFT

(45) Veröffentlichungstag der Patentschrift: **01.04.92**

(51) Int. Cl.5: **G11B 15/22**, G11B 15/665

(21) Anmeldenummer: **87112190.1**

(22) Anmeldetag: **22.08.87**

(54) **Wickel- und Bandantrieb.**

(30) Priorität: **28.08.86 DE 3629324**

113547

(43) Veröffentlichungstag der Anmeldung:
**02.03.88 Patentblatt 88/09**

(73) Patentinhaber: **Deutsche Thomson-Brandt GmbH**
**Hermann-Schwer-Strasse 3 Postfach 1307**
**W-7730 Villingen-Schwenningen(DE)**

(45) Bekanntmachung des Hinweises auf die
Patenterteilung:
**01.04.92 Patentblatt 92/14**

(72) Erfinder: **Schandl, Hartmut, Dipl.-Ing.**
**Egerstrasse 2**
**W-7730 Villingen(DE)**
Erfinder: **Weisser, Fritz, Dipl.-Ing.**
**Kesselberg 15**
**W-7742 St. Georgen(DE)**

(84) Benannte Vertragsstaaten:
**AT BE CH DE ES FR GB GR IT LI LU NL SE**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

(56) Entgegenhaltungen:
EP-A- 0 191 647

PATENT ABSTRACTS OF JAPAN vol. 6, no.
229 (P-155)(1107) 16 November 1982, & JP-
A-57 130258 (MITSUBISHI)

PATENT ABSTRACTS OF JAPAN vol. 9, no.
167 (P-372)(1890) 12 Juli 1985, & JP-A-60
43251 (SANYO)

PATENT ABSTRACTS OF JAPAN vol. 9, no.
30 (P-333)(1753) 8 Februar 1985, & JP-A-59
172177 (SANYO)

PATENT ABSTRACTS OF JAPAN vol. 8, no.
237 (P-310)(1674) 30 Oktober 1984, & JP-A-59

## Beschreibung

Video- und Audiorekorder speichern die Information vorzugsweise auf Magnetband, das in einer Kassette auf zwei nebeneinanderliegenden Wickelkörpern untergebracht ist. Die Kassette ist dabei so eingelegt, daß die Wickelkörper kraftschlüssig in entsprechende Dorne der Antriebsmechanismen des Abspielgerätes einrasten.

Bei handelsüblichen Videorecordern mit einer rotierenden Kopftrommel ist es erforderlich, das Magnetband durch eine Mechanik aus der Kassette herauszuziehen und mit Hilfe von Führungen an den Umfang der Kopftrommel anzulegen. Dieser Fädelvorgang wird durch einen Motor, auch Fädelmotor genannt, bewirkt, der das Magnetband z.B. mit über Kurvenscheiben angetriebene Fädelwagen in seine Spielposition bringt.

Durch einen weiteren Motor, der auch gleichzeitig als Capstan-Motor ausgebildet sein kann werden die Wickelteller angetrieben, wobei dieser Antrieb z.B. über ein Schwenkrad erfolgt, das jeweils an den ziehenden Wickelteller angekoppelt wird, während der Abwickelteller über eine Reibungsbremse die geforderte Bandspannung aufrechterhält. Weil eine gleichmäßige Bandspannung über die gesamte Bandlänge notwendig ist, wird durch einen Bandzugfühler die jeweilige Bandspannung abgetastet und je nach Stellung des Fühlers in eine angepaßte Bremswirkung für den Abwickelteller umgesetzt.

Es ist bekannt, die Wickelteller von einem Wickelmotor, der gleichzeitig die Tonwelle treibt, über ein Schwenkrad anzutreiben, wobei jeder Wickelteller mit einer Rutschkupplung versehen ist. Der Antrieb erfolgt an der Antriebsseite der Rutschkupplung. Eine gleichmäßige Bandspannung wird über diese Kupplungen in Verbindung mit einer Umschlingungsbremse erreicht, die durch den Bandzugfühler gesteuert, am Kupplungsteil des Abwickeltellers angreift. Für veränderte Geschwindigkeit der Wickelteller z.B. bei Bildsuchlauf ist es üblich, das Schwenkrad über ein oder mehrere Zwischenräder anzutreiben, die z.B. mit Hilfe einer Kulissensteuerung in Eingriff gebracht werden. Bei Bandstillstand werden die Wickel mit Hilfe einer Bremse blockiert, die z.B. durch einen Zugmagneten im Spielbetrieb gelöst wird.

Um das Magnetband nach einem Umspulvorgang sicher und ohne Schlaufenbildung abzubremsen, muß stets der Abwickelteller stärker gebremst werden als der Aufwickelteller. Das geschieht im allgemeinen dadurch, daß die Bremsen so asymmetrisch zum Wickelteller angebracht werden, daß sie sich in den abwickelnden Teller einkeilen, wodurch die Bremskraft wesentlich verstärkt wird. Begrenzt wird die Andruckkraft in diesem Fall meist durch die Elastizität des Kunststoffbremshebels oder der Bremsbeläge. Ein genaues Einstellen der Bremskräfte ist dabei jedoch nicht möglich.

Es ist auch eine Bremseinrichtung bekannt (EP-A1- 0 191 647), die vom Fädelmotor über einen Bremsschieber ohne Zwischenschaltung einer Rutschkupplung angetrieben wird und für jeden der beiden Wickelteller jeweils eine mit einer vorgespannten Zugfeder zur Bremskrafterzeugung verbundenen Bremshebel aufweist. Die Steuerung der Bremshebel ist jedoch konstruktiv relativ aufwendig.

Es ist Aufgabe der Erfindung einen Wickel- und Bandantrieb für eine Magnetbandkassette aufzuzeigen, der sowohl eine Vereinfachung der Steuerung als auch der Wirkung der Bremseinrichtung durch genau definierte Andruckverhältnisse aufweist.

Diese Aufgabe wird gemäß der Erfindung durch die im Anspruch 1 aufgeführten Merkmale gelöst. Vorteilhafte Weiterbildungen der Erfindung sind in den Unteransprüchen beschrieben.

Im Prinzip wird von einem Fädelmotor, durch den neben Ein- und Ausfädelvorgängen des Magnetbandes auch der mechanische Ablauf der einzelnen Betriebsarten gesteuert wird, die Bremseinrichtung, d.h. die an den Wickeltellern angreifende Hauptbremse ohne Zwischenschalten einer Kupplung angetrieben. Dies geschieht z.B. über ein von der Welle des Fädelmotors mittels Riementrieb angetriebenen ersten Zahnrades, welches in eine erste Zahnstange mit festgelegter Zahnzahl eingreift, die mit einem, die Hauptbremsen betätigenden Bremsschieber verbunden ist. Der lineare Weg des Bremsschiebers besteht aus drei Teilabschnitten, wobei der mittlere Abschnitt den eigentlichen Arbeitsbereich für die Hauptbremse darstellt. In diesem mittleren Bereich ist der Bremsschieber über das erwähnte erste Zahnrad mit dem Fädelmotor verbunden. Die beiden Randabschnitte des Bremsschieberweges sind Überhubbereiche, in welchen keine Arbeit verrichtet werden muß.

In diesen Abschnitten erfolgt die Bewegung des Bremsschiebers über ein zweites Zahnrad, welches zusammen mit dem ersten Zahnrad auf einer Achse angeordnet sein kann, und vorzugsweise gleiche Größe und gleiche Zahnteilung wie das erste Zahnrad aufweist. Dieses zweite Zahnrad ist mit dem ersten Zahnrad über eine Rutsch- oder Hysteresekupplung verbunden. Es greift in eine zweite Zahnstange des Bremsschiebers ein, die zusätzlich zum mittleren Arbeitsbereich der ersten Zahnstange einen Überhubbereich in beiden Richtungen über den Bereich der ersten Zahnstange hinaus aufweist.

Abhängig von der Motordrehrichtung wird der Bremsschieber aus einer Endposition vom zweiten Zahnrad soweit bewegt, bis die erste Zahnstange in das erste Zahnrad eingreift, somit die nötige Kraft auf den Bremsschieber überträgt, und ihn bis nahe an die zweite Endposition bewegt. Dabei werden die Bremsen betätigt. Vor Erreichen dieser zweiten Endposition kommt jedoch das erste Zahnrad wieder außer Eingriff und das zweite Zahnrad, das mit der zweiten Zahnstange ständig in Eingriff bleibt, bringt den Bremsschieber mit der durch die Rutschkupplung vorgegebenen Kraft in die Endposition. Der Fädelmotor kann sich nun ohne wesentliche Reibungsverluste weiterdrehen und andere Steueraufgaben erfüllen.

Die Reibung der Rutschkupplung verhindert ein Zurückgleiten des Bremsschiebers auch bei Motorstillstand. Im Falle einer Drehrichtungsumkehr des Fädelmotors läuft der oben beschriebene Vorgang in der Gegenrichtung ab, wobei bei positiver Drehrichtung des Motors (Einfädeln) Hauptbremsen und Capstanbremse gelöst werden, bei negativer Drehrichtung jedoch in Eingriff gebracht werden.

Der wesentliche Vorteil dieser Anordnung liegt in dem geringen benötigten Reibmoment der Rutschkupplung, da diese nur für den Überhubbereich und nicht für eine Arbeitsfunktion verwendet wird.

Die verbesserte Wirkung der Bremse beruht darauf, daß die Kraft, mit der die Bremsbacke an den Wickelteller angepreßt wird, über eine Feder aufgebracht wird, die neben dem Drehpunkt des Bremshebels angreift und somit ein Drehmoment erzeugt.

Die Lagerung des Bremshebels im Drehpunkt erfolgt in einem Langloch, so daß der Bremshebel jederzeit gegen die Federkraft aus seinem bisherigen Drehpunkt ausweichen kann, wobei dann ein anderer Punkt des Bremshebels gegen einen Anschlag läuft, der als neuer Drehpunkt dient. Somit ergibt sich im Falle der einen Drehrichtung des Wickeltellers eine Anpreßkraft, die aus der Federandruckkraft resultiert, welche in einem bestimmten Abstand vom Drehpunkt angreift.

Bei entgegengesetzter Drehrichtung keilt jedoch der Bremshebel ein und wird vom Teller soweit verdreht, daß er aus der ehemaligen Lagerung innerhalb des Langloches abhebt und gegen den neuen Drehpunkt anschlägt. Die Bremsgeometrie ist nun eine andere, obwohl die Bremskraft weiterhin von derselben Feder aufgebracht wird. Da diese Feder so ausgebildet sein kann, daß sie auf beide Wickeltellerbremsen gleichmäßig wirkt, ist somit das Verhältnis der Andruckkräfte der beiden Bremsen zwischen aufwickelndem und abwickelndem Teller in beiden Drehrichtungen stets konstant.

Die Erfindung wird im folgenden in einem Ausführungsbeispiel anhand der Figuren erläutert.

Darin zeigen:

Fig. 1 eine Bremseinrichtung mit Antrieb von einem Fädelmotor

Fig. 2 eine Darstellung der Kräfteverhältnisse der Bremseinrichtung.

Aus Darstellungsgründen ist die Kraftübertragung über die Einheit 13 bis 18 auf den Bremsschieber 10 versetzt gezeichnet. Im montierten Zustand liegen die Mittellinien A-A senkrecht übereinander.

Der nicht dargestellte Fädelmotor treibt über die Riemenscheibe 18 das erste Zahnrad 15 direkt und das zweite Zahnrad 16 über die Rutschkupplung 17 an. Auf der gemeinsamen Welle 13 ist außerdem eine Schnecke 14 für den Antrieb einer Fädeleinrichtung angeordnet.

Mit dem Bremsschieber 10 sind zwei Zahnstangen 11 und 12 fest verbunden, in die die Zahnräder 15 und 16 eingreifen. Je nach Drehung der Zahnräder wird Bremsschieber 10 in Pfeilrichtung verschoben. Über die Klaue von Bremsschieber 10 wird Bremshebel 3 um seinen Drehpunkt 7 bewegt. Bremshebel 4 ist mit Bremshebel 3 über Feder 5, die als Stabfeder ausgebildet ist, mechanisch gekoppelt. Die Feder 5 ist an den Federangriffspunkten 6 mit den Bremshebeln verbunden.

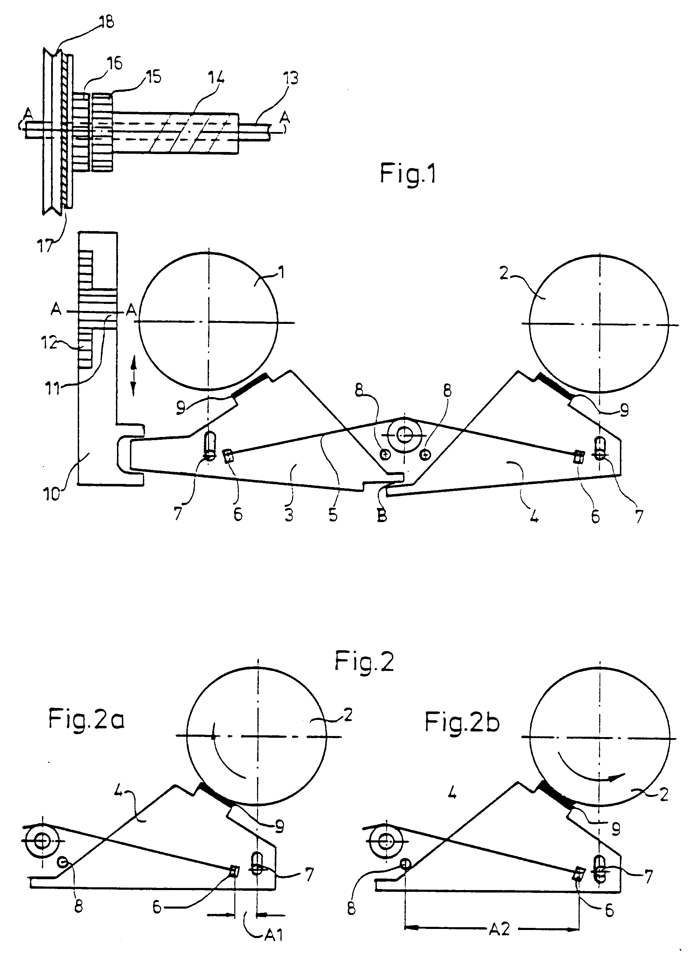

Die Kraftübertragung für die Bremswirkung von Bremshebel 3 auf Bremshebel 4 geschieht am Berührungspunkt B. Ebenso wie Bremshebel 3 ist Bremshebel 4 an seinem Drehpunkt 7 mit einem Langloch versehen, so daß jeder Bremshebel innerhalb des Langloches bei einer nach Fig. 2b beschriebenen Drehrichtung durch Einkeilung des Bremsbelages am Wickelteller aus der ehemaligen Lagerung abheben kann. Dabei schlägt der jeweile Bremshebel an den mit dem Chassis verbundenen neuen Drehpunkt 8 an. Durch diese Anordnung wird die Bremsgeometrie und damit die Bremswirkung geändert.Jeder Bremshebel ist mit einem Bremsbelag 9 versehen, der an den jeweiligen abzubremsenden Wickelteller 1,2 angepreßt wird.

Der lineare Weg von Bremsschieber 10 besteht aus drei Teilabschnitten, wobei der mittlere Abschnitt den eigentlichen Arbeitsbereich für die Hauptbremse darstellt. In diesem mittleren Bereich ist der Bremsschieber 10 über das erwähnte erste Zahnrad 15 mit dem Fädelmotor verbunden. Die beiden Randabschnitte des Bremsschieberweges sind Überhubbereiche, in welchen keine Arbeit verrichtet werden muß.

In diesen Abschnitten erfolgt die Bewegung des Bremsschiebers 10 über das zweite Zahnrad 16, welches mit dem ersten Zahnrad 15 über die Rutschkupplung 17 verbunden ist. Es greift in die zweite Zahnstange 12 des Bremsschiebers 10 ein, die zusätzlich zum mittleren Arbeitsbereich der ersten Zahnstange 11 einen Überhubbereich in beiden Richtungen über den Bereich der ersten Zahnstange 11 hinaus aufweist.

Abhängig von der Motordrehrichtung wird der Bremsschieber aus einer Endposition von dem zweiten Zahnrad 16 soweit bewegt, bis die erste Zahnstange 11 in das erste Zahnrad 15 eingreift, somit die nötige Kraft auf den Bremsschieber 10 überträgt, und ihn bis nahe an die zweite Endposition bewegt. Dabei werden die Bremshebel 3,4 betätigt. Vor Erreichen dieser zweiten Endposition kommt jedoch das erste Zahnrad 15 wieder außer Eingriff und das zweite Zahnrad 16, das mit der zweiten Zahnstange 12 ständig in Eingriff bleibt, bringt den Bremsschieber 10 mit der durch die Rutschkupplung 17 vorgegebenen Kraft in die Endposition. Der Fädelmotor kann sich nun ohne wesentliche Reibungsverluste weiterdrehen und andere Steueraufgaben erfüllen.

Die Reibung der Rutschkupplung 16 verhindert ein Zurückgleiten des Bremsschiebers 10 auch bei Motorstillstand. Im Falle einer Drehrichtungsumkehr des Fädelmotors läuft der oben beschriebene Vorgang in der Gegenrichtung ab, wobei bei positiver Drehrichtung des Motors (Einfädeln) die Bremshebel gelöst werden, bei negativer Drehrichtung jedoch in Eingriff gebracht werden. Die verbesserte Wirkung der Bremse beruht darauf, daß die Kraft, mit der die Bremsbacken 9 an den Wickelteller angepreßt wird, über die Feder 5 aufgebracht wird, die neben dem Drehpunkt 7 des jeweiligen Bremshebels angreift und somit ein Drehmoment erzeugt.

Fig. 2 zeigt eine Darstellung der Kräfteverhältnisse der Bremseinrichtung.

Nach Fig. 2a ergibt sich aus der Drehrichtung von Wickelteller 2 eine Anpreßkraft für Bremsbelag 9 an den Wickelteller 2, die aus der Federandruckkraft im Abstand A1 vom Drehpunkt 7 resultiert.

Bei entgegengesetzter Drehrichtung nach Fig. 2b keilt sich jedoch der Bremshebel 4 mit dem Bremsbelag 9 in den Wickelteller 2 ein. Der Bremshebel 4 wird von Wickelteller 2 soweit verdreht, daß er aus der Lagerung an Punkt 7 abhebt und an den Anschlag 8 stößt. Auf den Wickelteller 2 wird dabei eine Bremskraft ausgeübt, die sich aus der Federandruckkraft im Abstand von A2 vom neuen Drehpunkt 8 ergibt, die wesentlich größer als die Kraft A1 ist, welche sich bei entgegengesetzter Drehrichtung von Wickelteller 2 ergibt.

Die Bremsgeometrie ändert sich also. Da jedoch die Feder auf beide Bremshebel gleichmäßig wirkt, ist das Verhältnis der Andruckkräfte der beiden Bremsen zwischen aufwickelndem und abwickelndem Teller in beiden Drehrichtungen stets konstant.

**Patentansprüche**

1.  Wickel- und Bandantrieb für eine Magnetkassette, die zwei nebeneinanderliegende, das Magnetband führende Wikkelkörper aufweist, in die ein von einem Motor jeweils angetriebener Wickelteller (1, 2) eingreift, und mit einem Fädelmotor, von dem Mittel zum Aus- und Einfädeln des Magnetbandes und eine Bremseinrichtung für die Wikkelteller (1, 2) angetrieben werden, wobei der Antrieb der Bremseinrichtung über einen Bremsschieber (10) erfolgt, indem ein erstes Zahnrad (15) in eine mit dem Bremsschieber (10) verbundene Zahnstange (11) mit festgelegter Zahnzahl eingreift, **dadurch gekennzeichnet,** daß neben dem ersten Zahnrad (15) ein zweites Zahnrad (16) angeordnet ist, welches vom Fädelmotor über eine Rutschkupplung (17) angetrieben ist und in eine mit dem Bremsschieber (10) ebenfalls verbundene zweite Zahnstange (12) eingreift, welche gegenüber der ersten Zahnstange (11) eine größere Zahnzahl zur Bildung eines Überhubbereichs aufweist.

2.  Wickel- und Bandantrieb nach Anspruch 1, dadurch gekennzeichnet, daß das zweite Zahnrad (16) gleiche Größe wie das erste Zahnrad (15) aufweist, und beide Zahnräder auf derselben Achse (13) angeordnet sind.

3.  Wickel- und Bandantrieb nach Anspruch 1, dadurch gekennzeichnet, daß die Mittel zum Aus- und Einfädeln des Magnetbandes und das erste und das zweite Zahnrad (15,16) auf einer Achse (13) angeordnet sind, und daß die Achse (13) vom Fädelmotor über einen Riemen angetrieben ist.

4.  Wickel- und Bandantrieb nach einem der Ansprüche 1 bis 3, dadurch gekennzeichnet, daß die vom Bremsschieber (10) betätigte Bremseinrichtung aus zwei Bremshebeln (3,4) besteht, die über Bremsbacken (9) an die Wickelteller (1,2) angreifen und daß die Kraft, mit der die Bremsbacke (9) an den Wickelteller angepreßt wird, über eine Feder (5) aufgebracht wird, die neben dem Drehpunkt (7) des Bremshebels angreift und somit ein Drehmoment erzeugt.

5.  Wickel- und Bandantrieb nach Anspruch 4, dadurch gekennzeichnet, daß die Lagerung des Bremshebels (3,4) im Drehpunkt (7) in einem Langloch erfolgt, so daß der Bremshebel (3,4) jederzeit gegen den Federdruck aus seinem bisherigen Drehpunkt ausweichen kann, wobei dann ein anderer Punkt dieses Hebels gegen einen Anschlag (8) läuft, der dann als Drehpunkt dient.

**Claims**

1.  A winding and tape drive for a magnetic cassette, which has two adjacent winding bodies holding the magnetic tape, into which a spindle (1,2), each driven by a motor, engages, and having a threading motor by which one driven means for pulling the magnetic tape in and out and a braking device for the spindles (1,2), in which the drive of the braking device is effected via a brake slider 10, while a first gear wheel (15) engages a rack (11) which is connected to the brake slider (10) and has a fixed number of teeth, **characterised in that,** as well as the first gear wheel (15), a second gear wheel (16) is arranged which is driven by the threading motor via a slipping clutch (17) and engages a second rack (12) which is also connected to the brake slider (10), the said rack (12) having a larger number of teeth than the first rack (11), for forming an overrun region.

2. A winding and tape drive according to claim 1, **characterised in that** the second gear wheel (16) has the same size as the first gear wheel (15), and both gear wheels are arranged on the same axle (13).

3. A winding and tape drive according to claim 1, **characterised in that** the means for pulling the magnetic tape in and out and the first and second gear wheel (15,16) are arranged on one axle (13), and that the axle (13) is driven by the threading motor via a belt.

4. A winding and tape drive according to any one of claims 1 to 3, **characterised in that** the braking device which is actuated by the brake slider (10) consists of two brake levers (3,4) which via brake shoes (9) engage the spindles (1,2) and that the force, with which the brake shoe (9) is pressed against the spindle, is applied via a spring (5) which engages close to the pivot point (7) of the brake lever and thus produces a torque.

5. A winding and tape drive according to claim 4, **characterised in that** the bearing of the brake levers (3,4) is effected at the pivot point (7) in an elongate orifice, so that the brake lever (3,4) is able at any time to move against the spring pressure out of its previous pivot point, whereupon another point on this lever runs against a stop (8) which then serves as the pivot point.

**Revendications**

1. Commande d'enroulement et de bande pour une cassette de bande magnétique qui présente deux bobines situées l'une à côte de l'autre qui guident la bande magnétique dans lesquelles s'engrène un plateau d'enroulement (1, 2) respectivement entraîné par un moteur et avec un moteur d'enroulement qui entraîne des organes pour l'enroulement et le déroulement de la bande magnétique et un dispositif de freinage pour les bobines (1, 2), l'entraînement du dispositif de freinage étant réalisé par un verrou de frein (10), tandis qu'une première roue dentée (15) s'engrène dans une crémaillère (11), à nombre de dents déterminé, reliée au verrou de frein (10), **caractérisée en ce** qu'une seconde roue dentée (16) est placée à côté de la première roue dentée (15), seconde roue dentée qui est entraînée par le moteur d'enroulement par l'intermédiaire d'un accouplement à glissement (17) et qui s'engrène dans une seconde crémaillère (12) également reliée au verrou de frein (10) qui présente un nombre de dents supérieur à celui de la première crémaillère (11) pour former une zone de course perdue.

2. Commande d'enroulement et de bande selon la revendication 1, **caractérisée en ce** que la seconde roue dentée (16) présente la même taille que la première roue dentée (15) et que les deux roues dentées sont placées sur le même axe (13).

3. Commande d'enroulement et de bande selon la revendication 1, **caractérisée en ce** que les organes pour le déroulement et l'enroulement de la bande magnétique et la première et la seconde roue dentée (15, 16) sont placés sur un axe (13) et que l'axe (13) est entraîné par le moteur d'enroulement par l'intermédiaire d'une courroie.

4. Commande d'enroulement et de bande selon l'une des revendications 1 à 3, **caractérisée en ce** que le dispositif de freinage actionné par le verrou de frein (10) est constitué par deux leviers de frein (3, 4) qui attaquent par des mâchoires (9) sur les plateaux d'enroulement (1, 2) et que la force avec laquelle la mâchoire (9) est pressée contre le plateau d'enroulement est appliquée par un ressort (5) qui attaque à côté du point d'appui (7) du levier de frein et qui crée ainsi un couple de rotation.

5. Commande d'enroulement et de bande selon la revendication 4, **caractérisée en ce** que le positionnement du levier de frein (3, 4) se fait dans le point d'appui (7) dans un trou oblong si bien que le levier de frein (3, 4) peut à tout moment dévier de son point d'appui jusqu'à présent contre la pression du ressort, un autre point de ce lever allant alors contre une butée (8) qui sert alors de point d'appui.

Fig.1

Fig.2

Fig.2a

Fig.2b